# EUROPÄISCHE PATENTSCHRIFT

(11) **EP 0 894 064 B1**
(45) Veröffentlichungstag und Bekanntmachung des Hinweises auf die Patenterteilung: **25.08.1999**
(21) Anmeldenummer: 97921615.7
(22) Anmeldetag: 16.04.1997
(51) Int. Cl.: B62J 9/00

(54) **TRANSPORTVORRICHTUNG**
TRANSPORT DEVICE
DISPOSITIF DE TRANSPORT

(30) Priorität: 17.04.1996 DE 19615138; 17.04.1996 DE 19615139
(43) Veröffentlichungstag der Anmeldung: 03.02.1999
(73) Patentinhaber: NUTTO, Uwe, 79100 Freiburg (DE)
(72) Erfinder: NUTTO, Uwe, 79100 Freiburg (DE)
(74) Vertreter: Zimmermann, Günter, Dr.
(86) Internationale Anmeldenummer: DE9700766
(87) Internationale Veröffentlichungsnummer: WO9738892

(56) Entgegenhaltungen:
- EP-A- 0 530 403
- DE-A- 4 422 772
- DE-C- 474 410
- DE-U- 9 215 430
- DE-U- 9 307 276

## Beschreibung

Die Erfindung bezieht sich auf eine Transportvorrichtung für Fahrzeuge zum Transport von Transportgütern, wobei am Fahrzeug mindestens eine Halterung mit vertikal ausgerichteter Öffnung vorgesehen ist und die Transportgüter mindestens eine vertikale Befestigungsvorrichtung aufweisen, wodurch die Transportgüter durch Einführen der Befestigungsvorrichtung in die Halterung an der Transportvorrichtung befestigbar sind und durch Ausführen der Befestigungsvorrichtung aus der Halterung von der Transportvorrichtung lösbar sind.

Bekanntlich werden Transportgüter bei Zweirädern hauptsächlich auf dem Gepäckträger transportiert. Hierbei treten bei schweren oder größeren Transportgütern wie beispielsweise Flaschenkästen mehrere Probleme auf. Einerseits leidet die Fahrsicherheit unter der Last, da der Schwerpunkt des gesamten Systems bestehend aus Fahrzeug, Fahrer und Transportgut verschoben wird und aufgrund eines Schwankens des Transportgutes, welches beim Transport auf dem Gepäckträger nie ganz vermieden werden kann, nicht konstant bleibt. Andererseits ist beim herkömmlichen Transport auf dem Gepäckträger die Sicherheit gegen ein Abrutschen und Herunterfallen des Transportgutes und damit die Zerstörung des Transportgutes nicht gewährleistet. Weiterhin wären diejenigen Probleme zu erwähnen, die beim Befestigen von schweren Transportgütern wie Flaschenkästen auftreten, da die Handhabung dieser Befestigung in Verbindung mit dem schweren Transportgut nicht einfach ist.

Durch die DE 4422772A1 ist eine Haltevorrichtung zum Transport von Flaschenkästen bekannt. Hierbei ist ein Traggestell vorgesehen, welches mit dem Gepäckträger verbunden ist und mehrere nach oben abstehende Halter aufweist. In die Halter ist seitlich ein Flaschenkasten mittels seiner Grifföffnung einhängbar. Die Halter können auch den Boden eines auf dem Gepäckträger abgestellten Flaschenkastens durchgreifen. Diese bekannte Haltevorrichtung weist ebenfalls in der Fahrsicherheit Schwächen auf. Wird ein Flaschenkasten auf den Gepäckträger gestellt, so daß die Halter den Kastenboden durchdringen, so liegen die gleichen Schwerpunktsverhältnisse wie bei einem ohne Haltevorrichtung auf dem Gepäckträger befestigten Flaschenkasten vor. Somit ist nur ein instabiles Fahrverhalten möglich. Wird ein Flaschenkasten auf der Seite eingehängt, so folgt eine Verlagerung des Schwerpunktes in Richtung der eingehängten Seite. Dies bringt eine noch größere Instabilität mit sich. Weiterhin ist bei seitlichem Einhängen der Flaschenkasten unten nicht befestigt, so daß der Flaschenkasten seitlich vom Fahrzeug weg ausschwingen kann, wodurch die Fahrstabilität extrem leidet. Hierbei sind auch Schäden am Gepäckträger beim Aufprall des Flaschenkastens beim Rückschwingen möglich. Weiterhin ist der Flaschenkasten nicht gegen das Herausfallen nach oben aus der seitlichen Halterung gesichert. Dies könnte auftreten, wenn man mit dem Fahrrad einen Bordstein herunterfährt oder durch ein Schlagloch fährt und der dabei auftretende Impuls den Flaschenkasten nach oben bewegt. Da der schwere Flaschenkasten über die Halter gehoben werden muß, ist außerdem das Einhängen des Flaschenkastens mühsam.

Weiterhin sind Verbindungselemente bekannt, die am Gepäckträger befestigbar sind und in welche das Transportgut eingehängt wird. Hierbei handelt es sich um S-förmige Hakenteile, die den jeweils eingehakten Gegenstand also sowohl den Gepäckträger als auch das Transportgut, formschlüssig umschließen. Auf diese Art ist eine Fixierung des Transportgutes in einfacher Weise möglich, allerdings ist auch hier keine Sicherung gegen das Ausschwingen des Transportgutes gegeben. Insbesondere bei schweren Gegenständen wie Getränkekästen tritt durch das Ausschwingen eine hohe Fahrinstabilität ein.

Eine Transportvorrichtung der eingangs genannten Art ist durch die GB 2047644 bekannt. Diese bekannte Transportvorrichtung besteht aus einem Rahmen, an welchem ein Motorradkoffer befestigbar ist. Der Koffer weist vier als Zapfen ausgebildete Steckverbindungen und eine Schraubverbindung auf. Mittels dieser fünf Verbindungen wird der Koffer an dem Rahmen befestigt. Hierzu werden die Zapfen in zwei Bohrungen an der Oberseite des Rahmens und in zwei Bohrungen an der Unterseite des Rahmens eingeführt und anschließend wird der Koffer durch Eindrehen einer Schraube in eine Gewindebohrung, welche an dem Rahmen angeordnet ist, fixiert. Nachteiligerweise ist bei dieser bekannten Transportvorrichtung die Handhabung beim Befestigen des Koffers recht aufwendig. Weiterhin ist eine Vielzahl von Verbindungen zwischen dem Rahmen und dem Koffer vorgesehen, so daß auch die Herstellung des Rahmens sehr aufwendig ist.

Die Aufgabe der Erfindung wird somit darin gesehen, die Vorrichtung der eingangs genannten Art so weiterzuentwickeln, daß eine vereinfachte Handhabung und Herstellung möglich ist. Weiterhin soll eine zuverlässige Sicherung gegen das Herunterfallen des Transportgutes, kein Ausschwingen des Transportgutes und ein sicheres Fahrverhalten auch beiin Transport schwerer Transportgüter ermöglicht werden.

Zur Lösung dieser Aufgabe wird erfindungsgemäß vorgeschlagen, daß die Vorrichtung gemäß dem Oberbegriff des Anspruchs 1 entsprechend den kennzeichnenden Merkmalen des Anspruchs 1 ausgebildet ist. Durch die Gestaltung der Halterung als Hohlprofil mit Nutführung und der Befestigungsvorrichtung als Riegelvorrichtung ist eine einfache Handhabung beim Befestigen des Transportgutes gegeben, da die Riegelvorrichtung lediglich in das Hohlprofil eingesetzt und nach unten geführt werden muß. Die im Stand der Technik bekannte aufwendige Befestigung mittels Steckverbindungen und einer Schraubverbindung entfällt somit. Weiterhin wird eine zuverlässige Befestigung des Transportgutes erreicht. Durch die vertikale Anordnung des Hohlproflls verläuft die Fixierung des Transportgutes auf einer vertikalen Achse, so daß ein Ausschwingen des Transportgutes nicht mehr möglich ist. Das Ausschwingen wird bereits bei Anordnung eines einzigen Hohlprofils vermieden. Weiterhin ist die erfindungsgemäße Transportvorrichtung in einfacher Weise herstellbar, da sie beispielsweise als Plastikformteil gebildet werden kann. Die erfindungsgemäße Vorrichtung eignet sich insbesondere zum Transport von teilbaren Flaschenkästen, die mit zwei linear verschieblichen Traggriffen ausgestattet sind, durch welche eine Verriegelung und Entriegelung der Kastenhälften vorgenommen werden. Die Riegelvorrichtungen, welche an diesen bekannten teilbaren Flaschenkasten vorgesehen sind, werden durch vertikales Verschieben in die Hohlprofile eingeführt. Zum Lösen des Flaschenkastens von der Transportvorrichtung müssen nun lediglich die Riegelvorrichtungen aus den Hohlprofilen wieder ausgeführt werden. Hierdurch ergibt sich eine zuverlässige und einfach handhabbare Transportvorrichtung für diese Flaschenkästen.

Wenn das Hohlprofil oder die Riegelvorrichtung mit einer Schrägfläche oder einer Keilfläche versehen ist, so kommt es beim Einführung der Riegelvorrichtung in das Hohlprofil zu einer Verspannung oder Festklemmen zwischen der Riegelvorrichtung und dem Hohlprofil. Diese Verspannung wird durch die Nutführung begünstigt, da das Hohlprofil insgesamt nicht mehr so starr ist und besser aufgeweitet werden kann. Damit ist eine sehr zuverlässige Sicherung des Transportgutes an der Transportvorrichtung gewährleistet.

Eine weitere bevorzugte Ausführungsform der Erfindung besteht darin, daß zwei Hohlprofile mittig und parallel vorgesehen sind. Durch die Anordnung der Hohlprofile in der Mitte der Transportvorrichtung wird der Schwerpunkt des angebrachten Transportgutes nach unten verlagert und befindet sich nicht mehr wie bei der bekannten Transportvorrichrung am oberen Rand des Gepäckträgers.

Um eine zusätzliche Sicherung zu erhalten, sieht eine weitere Ausgestaltung der Erfindung vor, daß ein als plattenförmige Auflagefläche ausgebildeter Lastaufnehmer vorgesehen ist. Durch den Lastaufnehmer wird auch die Handhabung beim Fixieren des Transportgutes äußerst einfach. Man muß lediglich das Transportgut auf den Lastaufnehmer heben und kann nun durch vertikales Verschieben der Riegelvorrichtung die Verbindung herstellen. Während des Verschiebens muß nicht mehr das Gewicht des Transportgutes gehalten werden, da diese Gewichtskraft vom Lastaufnehmer aufgenommen wird.

Um weitere Transportgüter zu transportieren, die nicht mit der beweglichen Riegelvorrichtung ausgestattet sind, ist vorteilhafterweise ein Bügel zum Einhängen dieser Transportgüter an der Transportvorrichtung vorgesehen.

Um eine sichere Montage der Transportvorrichtung an einem Gepäckträger zu gewährleisten, sieht eine weitere Ausgestaltung der Erfindung eine Nut zur Montage mittels hakenförmiger Verbindungselemente vor. Zweckmäßigerweise kann auch eine Lochreihe zur Montage vorgesehen sein.

Eine weitere bevorzugte Ausführungsform der Erfindung besteht darin, daß das Transportgut ein Fahrradkorb ist. Der Fahrradkorb weist die vertikal bewegliche Riegelvorrichtung auf und kann so an der Transportvorrichtung angebracht werden. Damit ist in einfacher Weise ein Transport von Einkaufsgüter in dem Fahrradkorb sowie der Transport einer Flaschenkastenhälfte möglich.

Die Erfindung wird nachstehend anhand der Zeichnung näher erläutert. Die Zeichnung zeigt Ausführungsbeispiele der Erfindung. Hierbei stellen dar:
Fig. 1 einen Gepäckträger, der mit Hohlprofilen ausgestattet ist,
Fig. 2 einen Gepäckträger nach Fig. 1, wobei zusätzlich ein Lastaufnehmer vorgesehen ist,
Fig. 3 einen Gepäckträger, an welchen die Transportvorrichtung montiert ist,
Fig. 4 eine weitere Ausführungsform der Transportvorrichtung,
Fig. 5 einen Haken zur Befestigung der Transportvorrichtung nach Fig. 4 an einem Gepäckträger und
Fig. 6 einen Fahrradkorb zur Befestigung an der Transportvorrichtung.

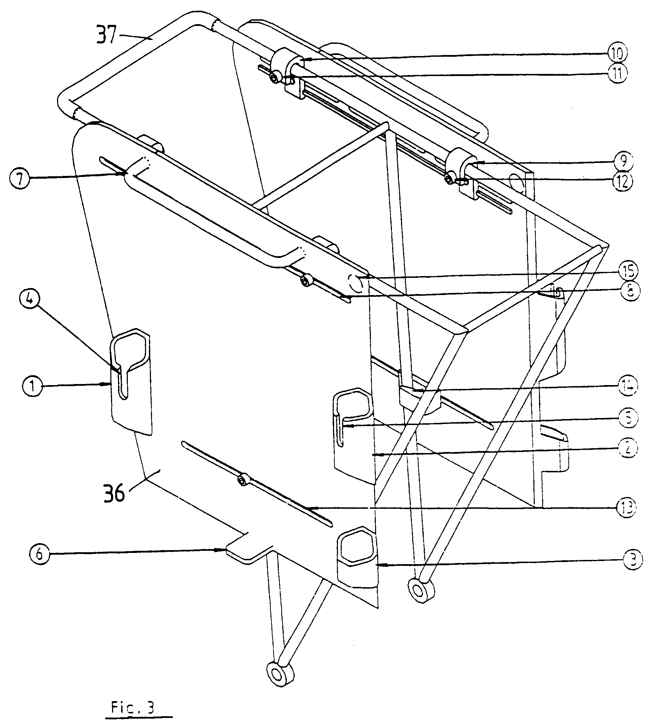

Wie in Fig. 3 dargestellt, weist die Transportvorrichtung zwei Hohlkörper oder Hohlprofile 1, 2 auf, welche auf einer ebenen Platte 36 montiert sind. Die Hohlprofile 1, 2 sind mit vertikal verlaufenden Führungsnuten 4, 5 versehen. Die Hohlprofile 1, 2 sind etwa in der Mitte der Platte 36 derart angeordnet, daß ihre Längserstreckung vertikal verläuft. Ein weiteres Hohlprofil 3 ohne Führungsnut ist im unteren Bereich der Platte 36 angeordnet. Zusätzlich ist im unteren Bereich der Platte ein als plattenförmige Auflagefläche ausgebildeter Lastaufnehmer 6 vorgesehen, welcher die Gewichtskraft des Transportgutes aufnehmen kann. Weiterhin ist im oberen Bereich der Platte ein Bügel 7 vorgesehen, an welchen zusätzlich Satteltaschen angebracht werden können. Zur Befestigung der aus der Platte 36 und den beiden Hohlprofilen 1, 2 bestehenden Transportvorrichtung an einem Gepäckträger 37 sind hakenförmige Verbindungselemente 9, 10, 14 vorgesehen. Hierbei sind zwei hakenförmige Verbindungselemente 9, 10 am oberen Ende der Transportvorrichtung montiert, wodurch die Transportvorrichtung einfach an den Gepäckträger 37 seitlich eingehängt werden kann. Das dritte hakenförmige Verbindungselement 14 umgreift eine vertikale Strebe des Gepäckträgers 37, wodurch ein Ausschwingen der gesamten Transportvorrichtung beim Fahren vermieden wird. Im oberen Bereich der Platte 36 ist eine Nut 8 vorgesehen und im unteren Bereich der Platte 36 ist eine Nut 13 vorgesehen. Durch die beiden Nuten 8, 13 ist es möglich, die hakenförmigen Verbindungselemente 9, 10, 14 an verschiedene Positionen an der Platte 36 zu montieren, wodurch eine Anpassung der Transportvorrichtung an verschiedene Gepäckträger möglich ist. Die Montage erfolgt durch Schrauben 11, 12. Durch die Schrauben 11, 12 wird verhindert, daß die Transportvorrichtung nach oben vom Gepäckträger ausgehoben werden kann, was beispielsweise beim Fahren durch Schlaglöcher der Fall sein könnte. Durch eine in der Platte 36 angeordnete Ausnehmung oder Aussparung 15 kann ein Schloß geführt werden, wodurch eine Sicherung gegen Diebstahl gewährleistet ist.

Bei Benutzung der Transportvorrichtung wird die Riegelvorrichtung, welche an dem Transportgut angeordnet ist, in die Hohlprofile 1, 2 eingeführt und durch vertikales Verschieben nach unten arretiert. Zum Lösen wird die Riegelvorrichtung vertikal nach oben verschoben und wird so von den Hohlprofilen 1, 2 freigegeben. Damit ist eine einfache und gleichzeitig sichere Handhabung der Transportvorrichtung beim Befestigen und Lösen des Transportgutes gewährleistet. Weiterhin wird eine Ausschwingung des Transportgutes während des Transports vermieden, da die Fixierung entlang der vertikalen Achse jedes Hohlprofils 1, 2 verläuft.

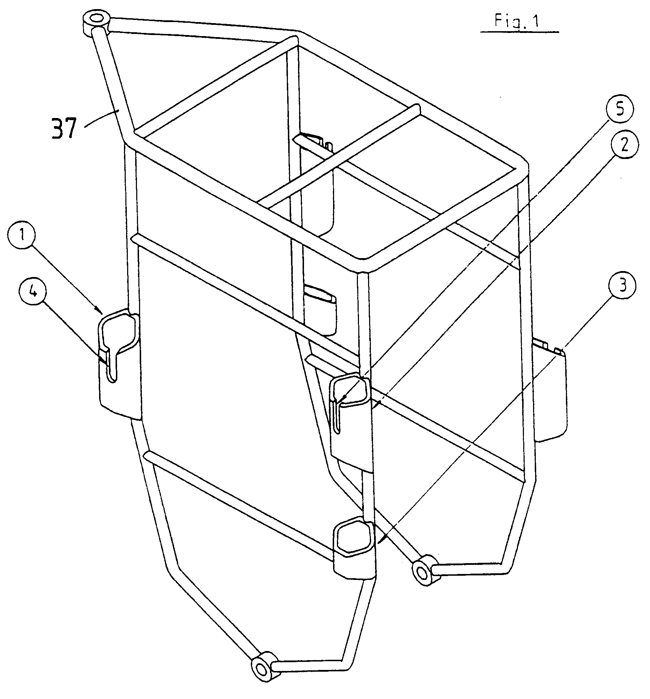

Bei der in Fig. 1 dargestellten Transportvorrichtung sind die Hohlprofile 1, 2 direkt an dem Gepäckträger 37 befestigt, wobei das Hohlprofil 1 an einer linken Seitenstrebe des Gepäckträgers 37 und das Hohlprofil 2 an einer rechten Seitenstrebe des Gepäckträgers 37 angeordnet ist. Eine Platte, wie bei der Transportvorrichtung in Fig. 3, ist hier nicht vorgesehen.

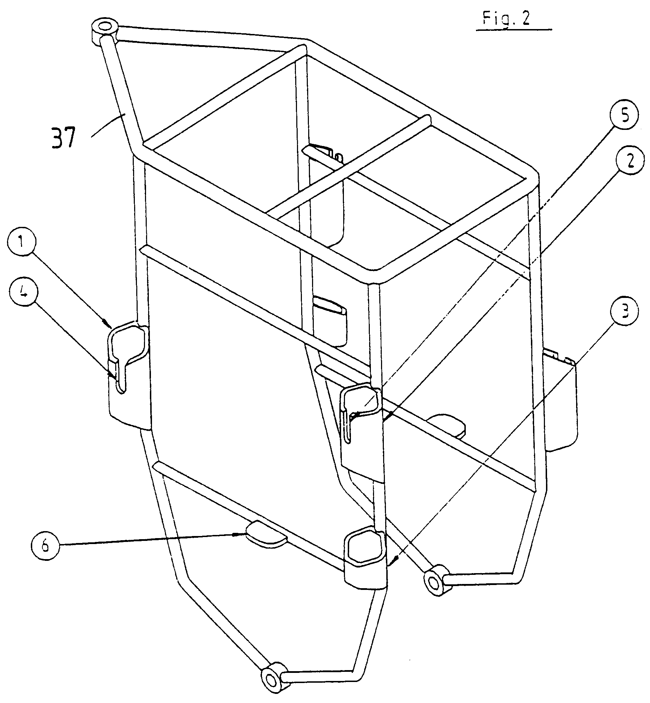

Bei der Transportvorrichtung gemäß Fig. 2 ist die Platte 36 ebenfalls nicht vorgesehen, sondern der Lastaufnehmer 6 ist direkt an einem unteren Quersteg zwischen der linken Seitenstrebe und der rechten Seitenstrebe des Gepäckträgers 37 befestigt.

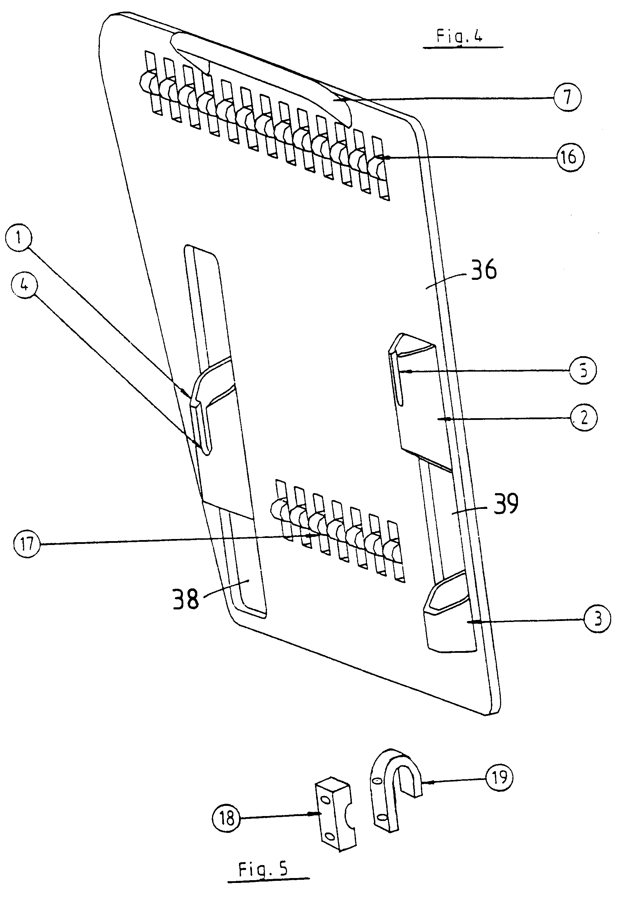

Fig. 4 zeigt eine ähnliche Transportvorrichtung wie Fig. 3. Anstelle der Nuten 8, 13 in Fig. 3 sind hier Lochreihen 16, 17 vorgesehen. Mittels der Lochreihen 16, 17 wird die Transportvorrichtung mittels Kabelbinder oder Rohrschellen an dem Gepäckträger 37 montiert. Jede Lochreihe 16, 17 besteht aus einer oberen Lochreihe und einer unteren Lochreihe. Durch die Wölbungen zwischen den oberen und den unteren Löchern jeder Lochreihe 16, 17 können sich die Kabelbinder oder Rohrschellen gut anpassen. Durch die große Anzahl der Löcher ist eine Anpassung an verschiedene Gepäckträgertypen möglich. Anstelle der Kabelbinder oder Rohrschellen kann zur Befestigung der Transportvorrichtung an dem Gepäckträger 37 auch das in Fig. 5 dargestellte zweiteilige hakenförmige Verbindungselement 18, 19 verwendet werden. In der Platte 36 sind durchgehende rechteckförmige Ausnehmungen 38, 39 vorgesehen, welche vertikal verlaufen. In der Ausnehmung 38 ist das Hohlprofil 1 eingelassen. In der Ausnehmung 39 sind die Hohlprofile 2 und 3 eingelassen. Die Hohlprofile 1, 2, 3 sind fest mit der Platte 36 verschweißt. Es ist auch denkbar, die Hohlprofile 1, 2 und 3 und die Platte 36 einstückig auszubilden, beispielsweise als ein Plastikformteil. Durch die Anordnung der Hohlprofile 1, 2, 3 innerhalb der Platte sind bei geschlossener Verriegelung auch die Riegelelemente des Transportgutes innerhalb der Platte angeordnet, so daß das Transportgut insgesamt näher an der Transportvorrichtung ist.

Das in Fig. 5 dargestellte hakenförmige Verbindungselement 18, 19 besteht aus einem Einsatz 18, welcher frontal in die Lochreihen 16, 17 eingeführt werden kann, und einem Haken 19, welcher mit dem Einsatz 18 verschraubt wird.

Bei der Transportvorrichtung gemäß Fig. 3 und Fig. 4 kann dieser als Werbeträger verwendet werden, da die Mitte der Platte 36 Platz zum Bedrucken bietet.

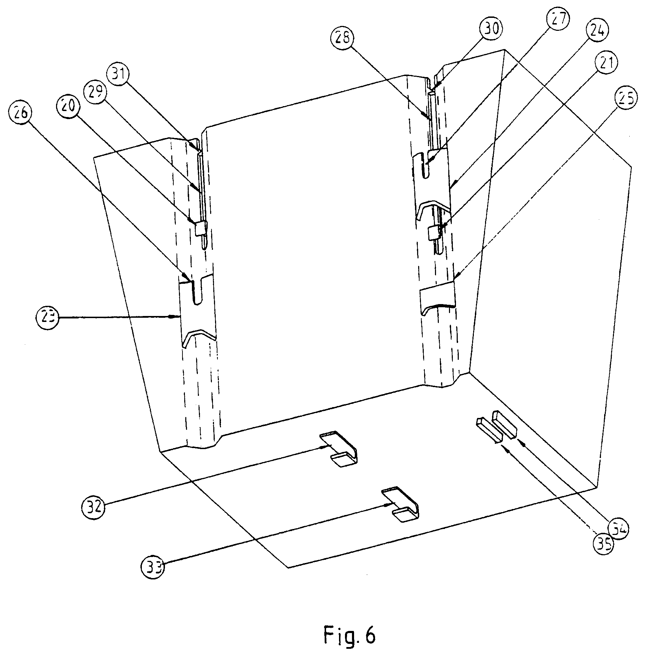

In Fig. 6 ist als Transportgut ein Fahrradkorb dargestellt. An dem Fahrradkorb ist eine Riegelvorrichtung vorgesehen, welche vertikal verschiebbar ist und Keilflächen 20, 21 aufweist. Beim Anbringen des Fahrradkorbes an die Transportvorrichtung werden die Keilflächen 20, 21 in die Nutführungen 4, 5 der Hohlprofile 1, 2 eingeführt und nach unten verschoben bis sie mit den Hohlprofilen 1, 2 verspannen. Die vertikale Verschiebung der Keilflächen 20, 21 erfolgt manuell durch ein in Fig. 6 nicht dargestelltes querverlaufendes Stangenprofil, welches sich oberhalb der Keilflächen 20, 21 befindet und die beiden Keilflächen bewegunsmäßig miteinander verbindet. Durch die verschiedenen Höhenanordnungen der Keilflächen 20, 21 ist in Verbindung mit der ebenfalls unterschiedlichen Anordnung der Hohlprofile 1, 2 eine formschlüssige Verbindung zwischen dem Fahrradkorb und der Transportvorrichtung geschaffen. Der Fahrradkorb weist ebenfalls Hohlprofile 23, 24, 25, auf, welche mit denjenigen der Transportvorrichtung baugleich sind. Die Hohlproile 23 und 24 sind ebenfalls in ihrer Höhe unterschiedlich angeordnet. Dadurch kann dieser Fahrradkorb mit einem zweiten baugleich ausgebildeten Fahrradkorb verbunden werden. Die Hohlprofile 23. 24 weisen ebenfalls Nutführungen 26, 27 auf.

Damit die Riegelvorrichtung linear und vertikal verschoben werden kann, sind in der Seitenwand des Fahrradkorbes Nuten 28, 29 als Führungen vorgesehen. Durch eine keilförmige Ausbildung 30, 31 einer Seitenwand jeder Nut 28, 29 ist eine Begrenzung des Verschiebebereichs der Riegelvorrichtung gegeben. Die Erstmontage der Keilflächen 20, 21 in die Nuten 28, 29 erfolgt durch Einpressen der Keilflächen bzw. der Riegelvorrichtung in die Nuten 28, 29. Am Boden des Fahrradkorbes sind hakenförmige Verbindungselemente 32, 33 vorgesehen. Hierdurch kann der Fahrradkorb auf einem Gepäckträger derart montiert werden, daß der Fahrradkorb seitlich so eingeführt wird, daß die hakenförmigen Verbindungselemente 32, 33 entweder Längsstreben des Gepäckträgers oder die Bügel 7 von montierten Transportvorrichtungen untergreifen. Die Anordnung der hakenförmigen Verbindungselemente 32, 33 ist so gestaltet, daß auch bei Verbindung von zwei Fährradkörben diese Art der Befestigung möglich ist. Weiterhin sind am Boden des Fahrradkorbes Noppen 34, 35 vorgesehen, welche ein Verschieben des Fahrradkorbes auf dem Gepäckträger verhindern.

## Patentansprüche

1. Transportvorrichtung für Fahrzeuge zum Transport von Transportgütern, wobei am Fahrzeug mehrere Halterungen (1, 2, 23, 24) mit vertikal ausgerichteten Öffnungen und horizontal ausgerichteten Auflageflächen vorgesehen sind, die mit entsprechenden horizontal ausgerichteten Auflageflächen am Transportgut zusammenwirken, wobei die Transportgüter mindestens eine vertikale Befestigungsvorrichtung aufweisen, wodurch die Transportgüter durch Einführen der Befestigungsvorrichtung in die Halterungen an der Transportvorrichtung befestigbar sind und durch Ausführen der Befestigungsvorrichtung aus den Halterungen von der Transportvorrichtung lösbar sind,
dadurch gekennzeichnet,
daß die Halterungen als im Gebrauch vertikal ausgerichtete Hohlprofile (1, 2, 23, 24) mit im wesentlichen horizontal ausgerichteten Auflageflächen ausgebildet sind, wobei die Hohlprofile eine vertikale Nutführung (4, 5, 26, 27) aufweisen, und daß die Befestigungsvorrichtungen als gegenüber dem Transportgut verschiebbare Riegelvorrichtung (20, 21) mit einem Riegelhals und einer Verbreiterung ausgeführt ist, die die Nutführung hintergreifen kann.

2. Vorrichtung nach Anspruch 1,
dadurch gekennzeichnet,
daß zwei Hohlprofile (1, 2) mittig und parallel vorgesehen sind.

3. Vorrichtung nach einem der vorhergehenden Ansprüche,
dadurch gekennzeichnet,
daß ein als plattenförmige Auflagefläche ausgebildeter Lastaufnehmer (6) vorgesehen ist.

4. Vorrichtung nach einem der vorhergehenden Ansprüche,
gekennzeichnet durch eine Bügel (7) zum Einhängen von anderen Transportgütern, die nicht mit der beweglichen Riegelvorrichtung ausgestattet sind.

5. Vorrichtung nach einem der vorhergehenden Ansprüche,
gekennzeichnet durch eine Nut (8) zur Montage der Transportvorrichtung mittels hakenförmiger Verbindungselemente (9, 10) an verschiedene Gepäckträger an verschiedenen Positionen.

6. Vorrichtung nach einem der vorhergehenden Ansprüche,
gekennzeichnet durch eine Lochreihe (16) zur Montage der Transportvorrichtung mittels Verbindungselemente wie Kabelbinder oder Rohrschellen an verschiedene Gepäckträger an unterschiedlichen Positionen.

7. Vorrichtung nach einem der vorhergehenden Ansprüche,
gekennzeichnet durch eine Nut (13), in welcher ein hakenförmiges Verbindungselement (14) zur Fixierung an einer vertikal verlaufenden Strebe eines Gepäckträgers positionierbar ist.

8. Vorrichtung nach einem der vorhergehenden Ansprüche,
gekennzeichnet durch eine Lochreihe (17), in welcher ein Verbindungselement zur Fixierung an einer vertikal verlaufenden Strebe eines Gepäckträgers positionierbar ist.

9. Vorrichtung nach einem der vorhergehenden Ansprüche 4 bis 7,
gekennzeichnet durch Sicherungselemente (11, 12) zur Fixierung der Verbindungselemente (9, 10, 14) an dem Gepäckträger.

10. Vorrichtung nach einem der vorhergehenden Ansprüche,
gekennzeichnet durch eine Aussparung (15) zum Einhängen eines Schlosses als Sicherung gegen Diebstahl.

11. Vorrichtung nach einem der vorhergehenden Ansprüche,
dadurch gekennzeichnet,
daß die Hohlprofile (1, 2, 3) direkt an einem Gepäckträger lösbar oder unlösbar montiert sind.

12. Vorrichtung nach einem der vorhergehenden Ansprüche,
dadurch gekennzeichnet,
daß das Transportgut ein Fahrradkorb ist.

## Claims

1. Transport device for vehicles for transporting transport items, where on the vehicle are provided several holders (1, 2, 23, 24) with vertically aligned openings and horizontally aligned support surfaces which co-operate with corresponding horizontally aligned support surfaces on the transport item, where the transport items have at least one vertical fixing device by which the transport items can be attached by introduction of the fixing device into the holders on the transport device and released by withdrawing the fixing device from the holders on the transport device,
characterised in that
the holders are formed as hollow profiles (1, 2, 23, 24) aligned vertically in use with essentially horizontally aligned support surfaces, where the hollow profiles have a vertical groove guide (4, 5, 26, 27), and in that the fixing device is designed as a bolt device (20, 21) which is movable in relation to the transport item, has a bolt neck and an expanded part, and can engage behind the groove guide.

2. Device according to claim 1,
characterised in that
two hollow profiles (1, 2) are provided centrally and parallel.

3. Device according to any of the previous claims,
characterised in that
a load carrier (6) is provided which is structured as a platform support surface.

4. Device according to any of the previous claims,
characterised by a bracket (7) for suspension of other transport items not equipped with the movable bolt device.

5. Device according to any of the previous claims,
characterised by a groove (8) for mounting of the transport device by means of hook-like connecting elements (9, 10) on various luggage carriers at various positions.

6. Device according to any of the previous claims,
characterised by a series of holes (16) for mounting of the transport device by means of connecting elements such as cable ties or pipe clamps to various luggage carriers at different positions.

7. Device according to any of the previous claims,
characterised by a groove (13) in which can be positioned a hook-like connecting element (14) for attachment to a vertical bar of a luggage carrier.

8. Device according to any of the previous claims,
characterised by a series of holes (17) in which can be positioned a connecting element for attachment to a vertical bar of a luggage carrier.

9. Device according to any of claims 4 to 7,
characterised by securing elements (11, 12) for fixing the connecting elements (9, 10, 14) to the luggage carrier.

10. Device according to any of the previous claims,
characterised by a recess (15) for suspension of a lock as a protection against theft.

11. Device according to any of the previous claims,
characterised in that
the hollow profiles (1, 2, 3) are mounted, releasably or permanently, directly onto a luggage carrier.

12. Device according to any of the previous claims,
characterised in that
the transport item is a cycle basket.

## Revendications

1. Dispositif de transport pour des véhicules pour le transport de produits à transporter, plusieurs supports (1, 2, 23, 24) étant prévus sur le véhicule avec des ouvertures dirigées verticalement et des surfaces d'appui dirigées horizontalement qui agissent avec des surfaces d'appui correspondantes dirigées horizontalement, les produits à transporter présentant au moins un dispositif de fixation vertical, sur quoi les produits à transporter peuvent être fixés par introduction du dispositif de fixation dans les supports du dispositif de transport, et sont amovibles par retrait du dispositif de transport hors des supports du dispositif de fixation, **caractérisé en ce que** les supports sont formés comme des profils creux (1, 2, 23, 24) dirigés verticalement en usage avec des surfaces d'appui dirigées essentiellement horizontalement, les profils creux présentant un guidage de rainure (4, 5, 26, 27) vertical, et **en ce que** les dispositifs de fixation sont exécutés comme un dispositif de verrouillage (20, 21) déplaçable par rapport au produit à transporter et muni d'un bec-de-cane et d'un élargissement permettant d'avoir prise sur le guidage de rainure par l'arrière.

2. Dispositif selon la revendication 1, **caractérisé en ce que** deux profils creux (1, 2) sont prévus de manière centrale et parallèle.

3. Dispositif selon l'une des revendications précédentes, **caractérisé en ce qu'**un dispositif d'accrochage de charge (6) formé comme une surface d'appui en forme de plaque est prévu.

4. Dispositif selon l'une des revendications précédentes, **caractérisé par** un étrier (7) pour accrocher d'autres produits à transporter qui ne sont pas équipés du dispositif de verrouillage mobile

5. Dispositif selon l'une des revendications précédentes, **caractérisé par** une rainure (8) pour le montage du dispositif de transport sur différents porte-bagages dans différentes positions au moyen d'éléments de raccordement (9, 10) en forme de crochets.

6. Dispositif selon l'une des revendications précédentes, **caractérisé par** une rangée de trous (16) pour le montage du dispositif de transport sur différents porte-bagages dans différentes positions au moyen d'éléments de raccordement comme des bandes pour câbles ou des colliers de serrage.

7. Dispositif selon l'une des revendications précédentes, **caractérisé par** une rainure (13) dans laquelle un élément de raccord (14) en forme de crochet est positionnable pour la fixation sur un montant vertical d'un porte-bagages.

8. Dispositif selon l'une des revendications précédentes, **caractérisé par** une rangée de trous (17) dans laquelle un élément de raccord est positionnable pour la fixation sur un montant vertical d'un porte-bagages.

9. Dispositif selon l'une des revendications précédentes 4 à 7, **caractérisé par** des éléments de sécurité (11, 12) pour la fixation des éléments de raccordement (9, 10, 14) sur le porte-bagages.

10. Dispositif selon l'une des revendications précédentes, **caractérisé par** un évidement (15) pour accrocher un cadenas comme sécurité contre le vol.

11. Dispositif selon l'une des revendications précédentes, **caractérisé en ce que** les profils creux (1, 2, 3) sont montés directement sur un porte-bagages de façon amovible ou inamovible.

12. Dispositif selon l'une des revendications précédentes, **caractérisé en ce que** le produit à transporter est un panier de bicyclette.
